# EUROPEAN PATENT SPECIFICATION

(11) **EP 3 249 489 B1**
(45) Date of publication and mention of the grant of the patent: **06.01.2021**
(21) Application number: 17162882.9
(22) Date of filing: 24.03.2017
(51) Int. Cl.: G05D 23/19, F24F 11/30, F24F 110/10, G01K 1/02, H04Q 9/00, H04W 52/02, H04W 52/00

(54) **DISTRIBUTED TEMPERATURE MEASUREMENTS**
VERTEILTE TEMPERATURMESSUNGEN
MESURES DE TEMPÉRATURE RÉPARTIES

(30) Priority: 25.05.2016 EP 16171441
(43) Date of publication of application: 29.11.2017
(73) Proprietor: Siemens Schweiz AG, 8047 Zürich (CH)
(72) Inventor: Geiger, Florian Benedikt, 81675 München (DE); Prochnow, Jan Erik, 8006 Zürich (CH)
(74) Representative: Maier, Daniel Oliver

(56) References cited:
- US-A1- 2009 058 663
- US-A1- 2009 295 546
- US-A1- 2011 248 846
- US-A1- 2014 254 445
- US-B1- 7 522 639

## Description

### Background

The instant disclosure is about temperature measurements inside a structure. To that end, the instant disclosure teaches a comfort unit and a sensor unit. The comfort unit as well as the temperature sensor unit both communicatively couple to a communications network.

Comfort units have lately become commercially available that combine functionalities to detect presence, to sense volatile organic compounds (VOC, air quality), and to measure temperature as well as humidity. Those comfort units are typically mounted to the ceiling of a room inside a structure. The structure can, by way of non-limiting example, be a residential, commercial and / or industrial building or facility.

A PT1000 or a NI1000 temperature probe mounted to the ceiling of a room may be harnessed to accurately measure temperatures at ceiling level. Due to unevenly distributed temperatures those measurements may not accurately reflect temperatures at typical working heights. The issue may, at least in part, be mitigated by employing infrared sensors.

An infrared sensor that detects temperatures at working heights will actually detect the temperatures of any object within the field of detection of the sensor. In so doing, the infrared sensor will also record body temperatures when there are occupants within the range of the sensor. That is, individuals present in a structure may impair the accuracy of the temperature measurement.

Sensor units that measure temperatures and / or detect open windows and / or open doors have lately become available. These sensors commonly employ a temperature dependent resistor such as a PT1000 probe or a NI1000 probe to measure temperatures. In other words, wireless sensors have become available for installation inside a structure. These sensor units deliver measurements of temperatures and / or of open doors and / or of open windows at their respective locations within the structure.

(wireless) sensor units need be supplied with power. Frequently, wall-mounted sensor units do not connect to a power outlet. Accordingly, the sensor units require a (rechargeable) battery. It is then crucial to provide sensor units with sufficient battery lives in order that end clients accept such devices. The battery life of a (wireless) sensor unit typically has to last one year or longer.

To minimize power consumption, (wireless) sensor units may employ a network technique known as Bluetooth Low Energy (BLE). BLE devices commonly connect within ranges of 100 meters or less. They may show latencies of 100 milliseconds and may take more than 100 milliseconds to send data. Those limitations result in values of power consumption that are significantly lower compared to classic data transmission. In spite of reduced power consumption, a (wireless) sensor unit with an acceptable battery life remains a challenge.

Energy harvesting circuits may further mitigate the issue. These circuits employ photovoltaic cells and / or photodiodes to harness a power source such as ambient light. They may also use thermocouples to perform thermoelectric energy harvesting based upon the Seebeck effect. Integrated circuits have been developed specifically for energy harvesting purposes and are commercially available.

A source of power such as ambient light and / or a flow of heat from a warm end to a cool end is essential for energy harvesting. Lack of access to a power source may also exacerbate the issue of limited battery life, especially inside a structure where there is little or no incident sunlight. A (wireless) sensor unit that attains acceptable battery life even under unfavourable environmental and / or ambient conditions remains challenging.

The patent application US2014/0254445A1 was filed on 6 March 2014 and was published on 11 September 2014. US2014/0254445A1 teaches wireless sensor network wake-up range extension via energy harvesting and edge devices. The patent application US2009/295546A1 was filed on 10 August 2006 and was published on 3 December 2009. US2009/295546A1 relates to a method and to an apparatus for performing wireless sensor network communicating selectively using infrared and radio frequency communication. The present disclosure improves on (temperature) measurements inside a structure. The instant disclosure focuses on techniques for measurements inside a structure that improve on the battery lives of sensor units.

A patent US7522639B1 deals with synchronization among distributed wireless devices beyond communications range. An application 11/964,120 for this patent was filed on 26 December 2007.

### Summary

The present disclosure provides a method and / or devices and / or system for carrying out measurements inside a structure. To that end, a comfort unit is mounted inside a structure. The comfort unit combines functionalities such as measurements of volatile organic compounds and / or presence detection and / or wireless connectivity and / or temperature measurements within one device.

A (wireless and / or constrained) sensor unit is installed inside the same structure. The sensor unit may, for instance, detect open doors and / or and / or windows and / or may provide temperature measurements. The (wireless and / or constrained) sensor unit and the comfort unit both provide suitable interfaces such that they can communicatively couple to one another.

When the room unit and the (wireless and / or constrained) sensor unit are coupled, the room unit is operable to request measurement data from the sensor unit. Measurement data are transmitted from the (wireless) sensor unit to the room unit in response to a request. In so doing, transmission of data and power consumption are kept to a minimum. The technique also confers benefits in terms of reduced network traffic.

The above objects are achieved by a method and / or by a device and / or by a system for measurements inside a structure in accordance with the main claims of this disclosure. Preferred embodiments of the present disclosure are covered by the dependent claims.

It is a related object of the present disclosure to provide a method and / or a device and / or a system for measurements inside a structure wherein a (wireless) sensor unit is operable to compress data prior to data transmission.

It is another object of the present disclosure to provide a method and / or a device and / or a system for measurements inside a structure wherein a (wireless) sensor unit is operable to encrypt data to be transmitted.

According to a related object of the instant disclosure encrypted transmission involves a Diffie-Hellman key exchange.

It is still another object of the instant disclosure to provide a method and / or a device and / or a system for measurements inside a structure wherein a (wireless) sensor unit and a comfort unit are operable to directly communicate with one another.

It is yet another object of the instant disclosure to provide a method and / or a device and / or a system for measurements inside a structure wherein a (wireless) sensor unit and a comfort unit are operable to communicate with one another through a third device, wherein the networking device is different from the (wireless) sensor unit and is different from the comfort unit.

It is a related object of the instant disclosure to provide a method and / or a device and / or a system for measurements inside a structure wherein a (wireless) sensor unit and a comfort unit are operable to transmit data between each other through a networking device and wherein any data transmission between the comfort unit and the (wireless) sensor unit is encrypted such that the networking device cannot decrypt transmitted data.

It is yet another object of the instant disclosure to provide a method and / or a device and / or a system for measurements inside a structure wherein a (wireless) sensor unit is operable to inform the comfort unit of its battery being low.

It is a related object of the instant disclosure to provide a method and / or a device and / or a system for measurements inside a structure wherein a comfort unit upon receipt of a low battery signal indicates an alarm.

It is still an object of the instant disclosure to provide a commercial and / or industrial and / or residential building or facility with a comfort unit according to the instant disclosure.

It still is a related object of the instant disclosure to provide a commercial and / or industrial and / or residential building or facility with a (wireless) sensor unit according to the instant disclosure.

It is also an object of the instant disclosure to provide a system of (wireless) networked devices with a comfort unit according to the instant disclosure.

It is also a related object of the instant disclosure to provide a system of (wireless) networked devices with a (wireless) sensor unit according to the instant disclosure.

It is another object of the instant disclosure to provide a method of minimising power consumption of a (wireless) sensor unit by use of a less accurate temperature signal.

It is another object of the instant disclosure to provide a method for (temperature) measurements in a structure, wherein a first measured value (temperature) from a (wireless) sensor unit and a second measured value (temperature) derived from a comfort unit are combined to derive a value that is more accurate than the value obtained from the comfort unit and more accurate than the measured value obtained from the (wireless) sensor unit.

### Brief description of the drawings

Various features will become apparent to those skilled in the art from the following detailed description of the disclosed non-limiting embodiments. The drawings that accompany the detailed description can be briefly described as follows:
FIG 1 shows a structure with a plurality of comfort units and with a plurality of (wireless) sensor units.
FIG 2 schematically depicts a (wireless) sensor unit adapted for temperature measurements.
FIG 3 schematically depicts a (wireless) sensor adapted for detection of open doors and / or open windows.
FIG 4 provides a schematic of a comfort unit to be installed in a structure.

### Detailed decription

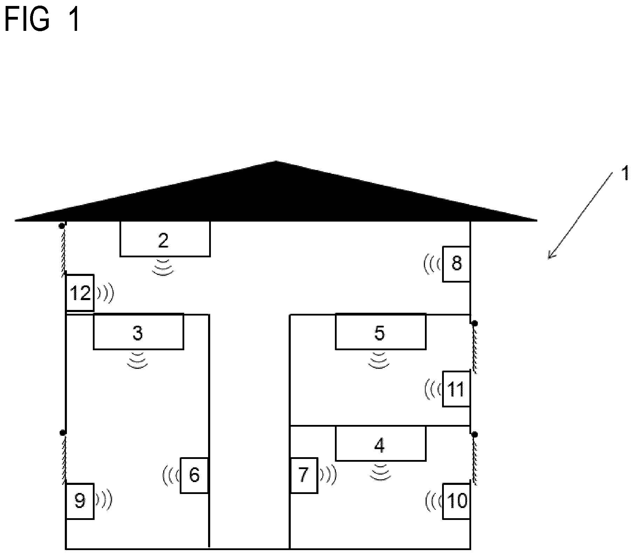

A structure 1 with a plurality of comfort units 2 - 5 is shown on FIG 1. The structure 1 can, by way of non-limiting example, be a commercial and / or residential and / or industrial building and / or facility. FIG 1 shows one comfort unit 2 - 5 installed per room. In addition, the structure 1 has at least one (wireless) sensor unit 6 - 12 installed in each room. As shown on FIG 1, more than one (wireless) sensor unit 6 - 12 may be installed per room.

The comfort units 2 - 5 are advantageously mounted to a ceiling. In an alternate embodiment, at least one comfort unit 2 - 5 is wall-mounted. In yet another alternate embodiment, all of the comfort units 2 - 5 are wall-mounted.

The comfort units 2 - 5 typically connect to a power source via a power outlet. The power source may, by way of non-limiting example, be a 240 V, 50 Hz, alternating current source of electric power or a 110 V, 60 Hz, alternating current source of electric power. According to an aspect, at least one comfort unit 2 - 5 connects to a power source via a connector for ceiling lights. It is envisaged that at least one comfort unit 2 - 5 is mechanically mounted to a socket for ceiling lights.

The (wireless) sensor units 6 - 8 may, by way of non-limiting example, be operable to measure temperatures and as such be wall-mounted. They 6 - 8 are advantageously mounted at working heights of approximately 1 meter to 1.5 meters. Accordingly, the (wireless) sensor units 6 - 8 are disposed inside the structure 1 in order to measure temperatures at typical working heights. It is envisaged that at least one (wireless) sensor unit 6 - 12 is wall-mounted by means of a socket for thermostats.

(wireless) sensor units 9 - 12 may, by way of another non-limiting example, be operable to detect open windows. They 9 - 12 are advantageously mounted in the vicinity of a window, in particular underneath a window. The (wireless) sensor units 9 - 12, may also be installed sideways on to a window of the structure 1.

It is envisaged that the structure 1 also comprises (wireless) sensor units that are operable to detect open doors. These sensor units are advantageously mounted in the vicinity of a door, in particular sideways on to a door of the structure 1. In an embodiment, the (wireless) sensor unit is mounted to a lintel of a structure.

The (wireless) sensor units 6 - 12 are advantageously battery-powered. In an embodiment, the battery is a rechargeable battery. The rechargeable battery preferably is a lithium-ion type of battery or a lithium-polymer type of battery or a lithium-phosphate type of battery or a lead-acid type of battery or a nickel metal hydride type of battery. A (wireless) sensor unit 6 - 12 is ideally equipped with a battery that is optimized for low self-discharge.

According to an aspect, at least one (wireless) sensor unit 6 - 12 is powered by a fuel cell. In a particular embodiment, the fuel cell is a solid oxide fuel cell. In another particular embodiment, the fuel cell is a polymer electrolyte membrane fuel cell.

In another embodiment, the power source comprises a rechargeable battery connected to a fuel cell. The fuel cell is operable to recharge the battery as soon as the battery is low. The processing module 13 may, by way of non-limiting example, sense that the battery of the unit is low. The processing module 13 then activates the fuel cell in order that the battery is recharged. The processing module 13 deactivates the fuel cell as soon as the battery is sufficiently charged.

It is also envisaged that at least one (wireless) sensor unit 6 - 12 connects to a power outlet via a suitable plug connector. The power outlet may, by way of non-limiting example, connect the sensor unit 6 - 12 to a 240 V, 50 Hz, alternating current source of electric power or to a 110 V, 60 Hz, alternating current source of electric power. The power outlet may, by way of another non-limiting example, connect the (wireless) sensor unit 6 - 12 to a 5 V direct current source of electric power.

The (wireless) sensor units 6 - 12 and the comfort units 2 - 5 are operable to communicatively couple to a network for (bi-directional) data transmission. The network advantageously is a wireless network.

A wide range of communication busses and protocols exist that provides communication functions in between comfort units and / or (wireless) sensor units. Wireless solutions such as WLAN, KNX RF, and/or Enocean are common. The choice of any particular wireless solution is also influenced by bandwidth considerations.

In a particular embodiment, the (wireless) sensor units 6 - 12 and / or the comfort units 2 - 5 communicate via a solution optimised for low power consumption. It is, in particular, envisaged that the units communicate via Bluetooth Low Energy. The (wireless) sensor units 6 - 12 may employ various protocols to communicate with their respective control units 2 - 5. There are cases where the devices of an installation rely on a single protocol such as KNX, Modbus, LON, BACnet, or Bluetooth. In addition, a number of proprietary protocols exist.

According to an aspect, at least two comfort units 2 - 5 are communicatively coupled via a hard-wired network. Hard-wired networks frequently rely on Ethernet cables or on KNX cables. The choice of any particular hard-wired solution is also influenced by bandwidth considerations.

According to another aspect, all of the comfort units 2 - 5 are operable to communicate with one another through a hard-wired network. Each of the sensor units 6 - 12 is operable to communicatively couple to at least one comfort unit 2 - 5 via a wireless network. The (wireless) sensor units 6 - 12 preferably couple to their respective comfort units 2 - 5 via Bluetooth (Low Energy).

According to yet another aspect, at least two devices 2 - 12 installed in the structure participate in a mesh network. That is, at least two devices 2 - 12 not only send and / or receive data but also route data through the network.

In the embodiment shown on FIG 1, each room of the structure comes with its own comfort unit 2 - 5. In an alternate embodiment, a single comfort unit covers a plurality of rooms. (wireless) sensor units located in different rooms then communicatively couple to the same comfort unit. In yet another alternate embodiment, a structure comes with a single comfort unit. In this case, all of the (wireless) sensor units present in the structure communicatively couple to the same comfort unit.

It is also envisaged that a suitable handheld device such as a mobile phone and / or a table computer may connect to the wireless network. The mobile phone and / or the handheld device may, for instance, obtain readings from the sensors attached to the (wireless) sensor units 6 - 12. A connection to a suitable handheld device may, for instance, be useful for purposes such as maintenance and / or repair. A connection to a suitable handheld device may, in particular, be useful for purposes such as detection of faulted devices and / or detection of (wireless) sensor units 6 - 12 with depleted batteries.

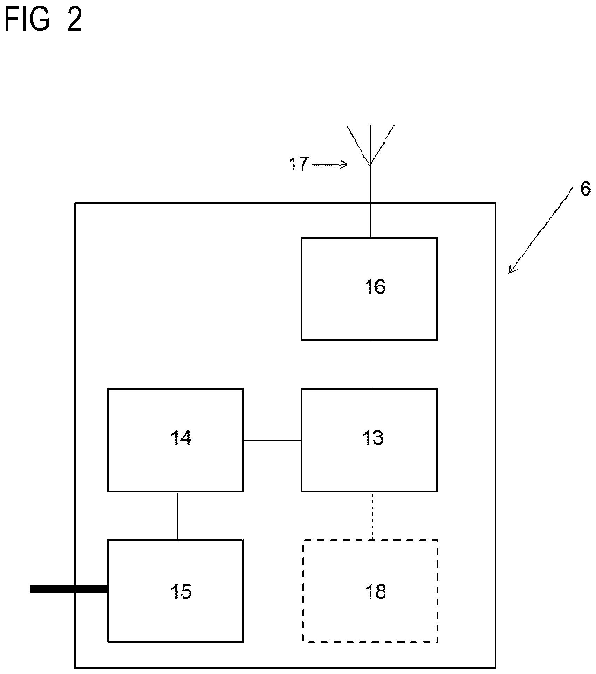

FIG 2 schematically shows a (wireless) sensor unit 6. The (wireless) sensor unit 6 provides a sensor in the form of a temperature probe 15. The temperature probe 15 may, by way of non-limiting example, rely on a PT1000 resistor or on a NI1000 resistor or on a PT100 resistor or on a NI100 resistor. In a special embodiment, the (wireless) sensor unit 6 provides a housing with an outer surface and the temperature probe 15 protrudes, at least in part, from the outer surface of the housing.

The (wireless) sensor unit 6 also comprises an input / output module 14. According to an aspect, the input / output module 14 is an analog-to-digital converter. The input / output module 14 is operable to capture an analog signal from the temperature probe 15 and to convert the signal into a binary representation. It is envisaged that the input / output module 14 is also operable to protect the remainder of the (wireless) sensor unit 6 from excessive voltages or currents. Excessive overvoltages at the connection between the temperature probe 15 and the input output module 14 may, by way of non-limiting example, be inhibited or mitigated by one or several diodes.

The input / output module 14 forms an interface between the temperature probe 15 and the processing module 13. The processing module may, for instance, be a (programmable) microprocessor or a (programmable) microcomputer. The input / output module 14 at least connects to an input channel of the processing module 13. The processing module 13 is thus operable to read digital values that correspond to temperature measurements carried out by the temperature probe 15.

The processing module 13 is advantageously optimized for low power consumption.

It is envisaged that the processing module 13 runs an operating system. The operating system may, for instance, be an Android operating system, a Windows operating system, or a Linux operating system such as Meego. The operating system may be a system specifically tailored to embedded systems and / or to controllers of heating, ventilation, air conditioning (HVAC) installations. The operating system may also be general-purpose.

According to an aspect, the processing module 13 is a microcomputer that also provides an input / output module 14 as part of the processing module 13. The processing module 13 may, for instance, provide an analog-to-digital converter. A temperature dependent resistor may then directly connect to the processing module. The combination of a processing module 13 and an input / output module within one device eliminates a component, thereby reducing cost. Further, a circuit with fewer components can be less prone to failure.

The processing module 13 optionally connects to a (non-volatile) memory 18. The non-volatile memory may, by way of non-limiting example, be a magnetic RAM, a flash memory, or a hard disk.

In a particular embodiment, the processing module 13 is a microprocessor and connects to a (non-volatile) memory. In an alternate embodiment, the processing module 13 is a microcomputer and comes with a non-volatile memory. The combination of a processing module 13 and non-volatile memory 18 in one device eliminates a component, thereby reducing cost. Further, a circuit with fewer components can be less prone to failure.

It is envisaged that the processing module 13 stores digital representations of measurement data in a non-volatile memory. The processing module 13 may, in particular, be operable to schedule the transmission of measurement data and store data in its (non-volatile) memory prior to transmission. According to an aspect, the processing module 13 is operable to delay data transmission and store measurement data when the power source of the (wireless) sensor unit 6 is depleted. The (wireless) sensor unit 6 recommences data transmission as soon as its power source becomes available again. To that end, the (wireless) sensor unit 6 reads measurement data from its memory 18. The (wireless) sensor unit 6 then proceeds and transmits these measurement data via the radio frequency interface 16 and via the antenna 17.

Referring to FIG 2, the (wireless) sensor unit 6 also comprises a radio frequency (RF) interface 16. The radio frequency interface 16 connects to an output channel of the processing module 13. The radio frequency module 16 functions to convert digital representations of data into electric current to be supplied to an antenna. In a particular embodiment, the radio frequency module 16 is configured bi-directional and also connects to an input channel of the processing module 13. That is, the (wireless) sensor unit 6 is operable to receive signals from other devices such as other sensor modules 7 - 12 or other comfort units 2 - 5.

In an embodiment, the radio frequency module 16 has an address such as a machine access control (MAC) address. The address ideally is a unique identifier that differentiates between devices.

The radio frequency module 16 may allow for unidirectional or for bidirectional wireless communication. Data transmission may be directional or non-directional. According to an aspect, radio frequency module 16 employs a modulation process that accommodates for the characteristics of the air interface between the receiver and the transmitter. Factors that influence the choice of any particular modulation process include, but are not limited to, range, immunity to disturbances, bit rate, channel bandwidth, characteristics of the channel etc.

According to an aspect, the modulation process may change over time as a function of the characteristics of the communication channel. The modulation process thus adapts continuously in order to achieve optimum performance.

According to another aspect, the bandwidth of any particular channel is subdivided into a plurality of frequency bands. Ideally, each frequency band uses its own particular modulation process that suits the characteristics of the frequency band. Each frequency band advantageously carries a proportion of data traffic that depends on the capacity of the frequency band for data transmission.

According to yet another aspect, a digital modulation process is employed to reduce and / or mitigate disturbances. A digital modulation process uses a digital signal to modulate an analog carrier. Digital modulation processes may, by way of non-limiting example, rely on techniques such as phase-shift-keying, continuous phase modulation, and / or quadrature amplitude modulation.

An output channel of the radio frequency interface 16 connects to an antenna 17. The choice of a suitable antenna depends on the characteristics of the network. In a particular embodiment, the antenna 17 is optimized for frequencies of 2.4 GHz. It is also envisaged that the antenna 17 is optimized for ranges of up to 100 meters. According to an aspect, the antenna 17 also connects to an input channel of the radio frequency interface 16, thereby allowing for bi-directional communication.

The processing module 13 is also operable to handle protocols in accordance with the type of the (wireless) network. That is, the processing module 13 is adapted to read the binary representation of a measured value and to forward that value to another device. To that end, the rules for communication with other devices 2 - 12 need be negotiated and observed. The processing module 13 advantageously functions to negotiate handshakes, bitrates, sizes of data packets and so forth in order to forward measurement data to another device such as a comfort unit 2 - 5. It is envisaged that the processing module 13 also carries out (cyclic) redundancy checks in order that no data are lost between a (wireless) sensor unit 6 and a comfort unit 2 - 5.

According to an aspect, the processing module 13 is operable to compress data prior to transmission. It is envisaged that the processing module 13 employs a Lempel-Ziv algorithm or similar for data compression. In an embodiment, the processing module 13 carries out compression itself. In another embodiment, the processing module 13 has a bi-directional connection to a compression module and compression is carried out by the compression module. The compression module may actually come as an application specific integrated circuit (ASIC).

According to another aspect, the processing module 13 is operable to encrypt data prior to transmission. It is envisaged that the processing module 13 encrypts data according to an algorithm known as Advanced Encryption Standard (AES). To that end, keys of 56 bits length and / or of 128 bits length are used. It is also envisaged that the processing module 13 participates in a Diffie-Hellman key exchange to determine a key.

In an embodiment, the processing module 13 carries out encryption itself. In another embodiment, the processing module 13 has a bi-directional connection to an encryption module and encryption is carried out by the encryption module. The encryption module may actually come as an application specific integrated circuit (ASIC).

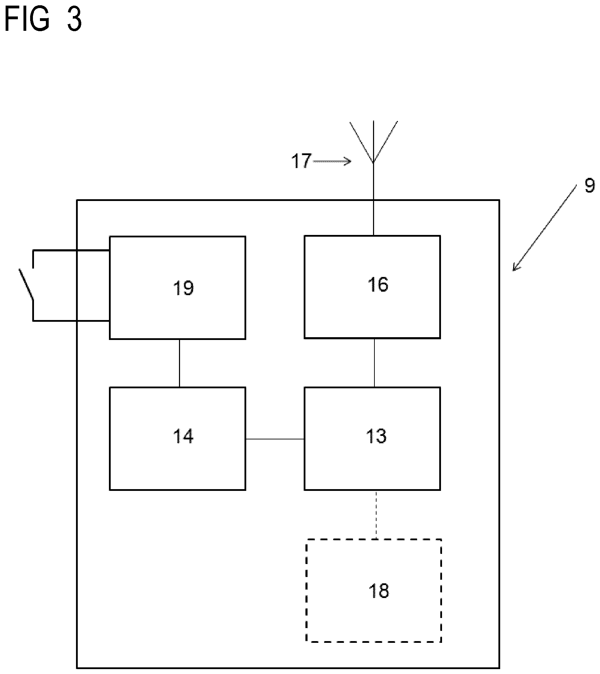

Referring now to FIG 3, a (wireless) sensor unit 9 for detecting open doors and / or open windows is shown. The (wireless) sensor unit 9 of FIG 3 mainly differs from the (wireless) sensor unit 6 of FIG 2 in that the temperature probe 15 has been replaced by a contact module 19. The contact module 19 connects to the processing module 13 via an input / output module 14. The aforementioned notes on the (wireless) sensor unit 6 continue to apply to the sensor unit 9 unless otherwise indicated.

The contact module 19 may, by way of non-limiting example, be a normally open or normally closed contact. The contact module 19 can, by way of non limiting example, comprise a Reed switch. A Reed switch can, for instance, be operated by a ferromagnetic member attached to a window and / or to a door. That way, the contact module 19 is operable to detect open or closed doors and / or windows. When the contact module 19 comes as a Reed switch, it may actually be arranged inside the housing of the sensor unit 9.

The contact module 19 may, by way of another non-limiting example, be a mechanical micro switch. A mechanical micro switch may, for instance, be mounted above or underneath a door and / or a window. As the door and / or the window opens or closes, the micro switch operates, thereby causing a signal to be send to the processing unit 13 via the input / output module 14. In a particular embodiment, the contact module 19 is a micro switch of the type used in safety interlocks. When the contact module 19 comes as a micro switch, it may actually be arranged outside the housing of the sensor unit 9. The sensor unit 9 may, in particular, provide a suitable connector allowing for connection of a mechanical switch as an external unit.

An input / output card with a binary input channel may serve as an input / output module 14 of the (wireless) sensor unit 9. The input / output card preferably provides diodes to protect the remainder of the sensor unit 9 from excessive voltages. The input / output card optionally also provides a circuit to protect the remainder of the sensor unit 9 from excessive electric currents.

In an embodiment, the contact module 19 directly connects to the processing module 13 via a binary input of the processing module 13. In a particular embodiment, a diode or similar protects the binary input of the processing module 13 against excessive voltages. Elimination of the input / output module 14 entails cost reductions. Further, a unit with fewer components is less prone to failure.

In an embodiment, a (wireless) sensor unit 6 - 12 provides a plurality of sensors within the same unit. It is envisaged that a sensor unit 6 - 12 combines sensors for temperatures as well as sensors for open or closed doors and / or windows in one device. It is further envisaged that a sensor unit 6 - 12 also provides functionalities to measure humidity and / or volatile organic compounds and / or (atmospheric) pressure. The input / output module 14 may actually be an input / output card combined to a multiplexer, such that signals from different input channels (from different sensors) can be recorded sequentially.

In an embodiment, the input / output module 14 also connects to a battery of the (wireless) sensor unit 6 - 12. The processing module 13 monitors the voltage of and / or the drain from the battery via the input / output module 14. The processing module 13 is thereby operable to detect a low battery. It is envisaged that the processing module 13 functions to dispatch an alarm in response to the battery of the (wireless) sensor unit 6 - 12 being low. The processing module 13 may, in particular, send a low battery alarm to another device via its radio frequency module 16 and via its antenna 17. The other device can, by way of non-limiting example, be another (wireless) sensor unit and / or a comfort unit 2 - 5 and / or a suitable handheld device. The various devices 2 - 12 may store tables of units 6 - 12 with low and / or depleted batteries. Those tables can then be accessed and be used to schedule replacement of those batteries and / or maintenance.

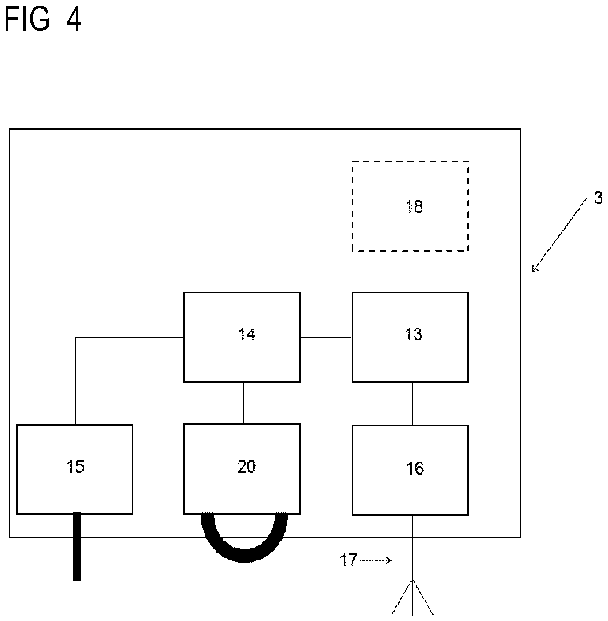

FIG 4 depicts a comfort unit 3. The comfort unit 3 comprises an antenna 17 connected to a radio frequency module 16. The radio frequency module 16 connects to a processing module 13.

The processing module 13 is operable to receive signals from an input / output module 14. The input / output module 14 as shown on FIG 4 is operable to receive signals from a temperature probe 15 and from a presence detection module 20. It is envisaged that the comfort unit 3 comprises additional sensor modules such as sensors for humidity and / or volatile organic compounds and / or atmospheric pressure and / or fire hazards. The processing module 13 preferably obtains readings from the sensor modules via the input / output module 14.

The processing module 13 may optionally read data from and store data in a (non-volatile) memory 18. The above notes on processing modules 13, memories 18, input / output cards 14, radio frequency modules 16 etc continue to apply unless otherwise indicated.

In spite of efforts such as energy harvesting, fuel cells, batteries with minimum self-discharge etc the batteries of (wireless) sensor units 6 - 12 may eventually run low. To improve battery life even further, (wireless) sensor units 6 - 12 may transmit readings in response to a demand. That is, a sensor unit 6 - 12 is active, carries out measurements and transmits signals when the sensor unit 6 - 12 is instructed to do so. A sensor unit 6 - 12 is otherwise in power-save mode thereby drastically lowering power consumption. The (wireless) sensor units 6 - 12 preferably activate upon receipt of an instruction from the comfort unit 2 - 5.

Temperature measurements carried out by a comfort unit 2 - 5 may be inaccurate for numerous reasons. Comfort units 2 - 5 are typically mounted to a ceiling. Those comfort units 2 - 5 then measure temperatures at ceiling level. Those measurements need not accurately reflect temperatures at working heights.

A temperature measurement that is inaccurate by one to three degrees Celsius does in most cases not impair comfort when there are no people present in a room. An accurate measurement of temperatures at working heights begins to play a role as soon an occupant cares. Inaccuracies necessarily also occur when a window is open to air a place. An accurate measurement of temperature may then be immaterial.

A comfort unit 2 - 5 according to the instant disclosure is operable to determine a need for an accurate temperature measurement. A comfort unit according to the instant disclosure is also operable to transmit a signal to activate a sensor unit 6 - 12 (in power-save mode). Accurate measurements may be obtained from these units 6 - 12 upon activation.

In an embodiment, the comfort unit 2 - 5 comprises a presence detection module 20. The processing module 13 receives data indicating presence in a structure 1 from the detection module 20. The processing module 13 may actually receive data from the detection module 13 via an input / output module 14.

The processing module 13 is operable to determine a need for accurate temperature measurements based on an indication of occupants being present. If that determination is positive, the processing module 13 generates an activation signal. The structure of the activation signal generally depends on the network protocol employed by the comfort unit 2 - 5 and by the (wireless) sensor units 6 - 12.

In an embodiment, the processing module 13 generates a broadcast signal for activation. A broadcast signal triggers activation of all the (wireless) sensor units 6 - 12 within reach of the comfort unit 2 - 5. In an alternate embodiment, the processing module 13 generates a targeted signal for activation. A targeted signal triggers activation of a targeted (wireless) sensor unit 6 - 12. The processing module 13 may, by way of non-limiting example, employ a machine access control address (MAC address) of a (wireless) sensor unit 6 - 12 to target a specific sensor unit 6 - 12. This example assumes that a (wireless) sensor unit 6 - 12 and its radio frequency module 16 can be identified through a MAC address. The example also assumes that the comfort unit 2 - 5 stores a (lookup) table of MAC addresses of (nearby) sensor units 6 - 9.

The processing module 13 may, by way of another non-limiting example, employ an internet (version 4 or 6) protocol address (IPv4 or IPv6 address) of a (wireless) sensor unit 6 - 12 to target a specific sensor unit 6 - 12. This example assumes that a (wireless) sensor unit 6 - 12 and its radio frequency module 16 can be identified through an IP address. The example also assumes that the comfort unit 2 - 5 stores a (lookup) table of IP addresses of (nearby) sensor units 6 - 9.

According to an aspect, the comfort unit 2 - 5 comprises a clock. The processing module 13 functions to read the current time from the clock. The comfort unit 2 - 5 also provides a memory 18 with a table. Typical periods of absence such as nighttime, weekends, lunch etc are stored in that table. The processing module 13 reads that table and compares the current time to typical periods of absence. If the processing module 13 finds that the current time matches a typical period of absence, it 13 will make a negative determination. The processing module 13 will thus not generate a signal for activation. The processing module 13 will otherwise make a positive determination, generate a signal for activation, and (attempt to) obtain values of accurate temperatures from a sensor unit 6 - 12.

According to another aspect, a temperature probe 15 of the comfort unit 2 - 5 measures a sharp drop in temperature. A sharp drop or a sharp rise in temperature generally indicates that a window has been opened. The processing module 13 receives a time sequence of temperature measurements (via the input / output module 14). The processing module 13 then determines a large change in temperature within a relatively short period of time. The processing module 13 consequently makes a negative determination, since temperature measurements are necessarily inaccurate when windows are open. The processing module 13 thus does not generate a signal for activation.

According to still another aspect, a comfort unit 2 - 5 receives from a sensor unit 6 - 9. The signal is received by the antenna 17 and passed on to the processing module 13 via the radio frequency module 16. The processing module 13 identifies the signal as a window open and / or as a door open signal. The processing module 13 may, for instance, employ a lookup-table stored in the memory 18 and compare a signal to the entries of that table in order to identify signals. The processing module 13 consequently makes a negative determination, since temperature measurements necessarily fluctuate when doors or windows are open. The processing module 13 thus does not generate a signal for activation.

In an embodiment, the processing module 13 is operable to generate a deactivation signal upon a negative determination. A deactivation signal may be a broadcast signal as well as a targeted signal. The sensor units 6 - 12 are operable to change into power-save mode upon receipt of a deactivation signal.

In another embodiment, the sensor units 6 - 12 provide clocks. The clock may, by way of non-limiting example, be part of the processing module 13. The sensor units 6 - 12 are operable to read values from the clock and to record a time stamp upon receipt of an activation signal. The (wireless) sensor units 6 - 12 then determine the time that has lapsed since the last activation signal. The sensor units 6 - 12 further store and read at least one timeout value. When the time lapsed exceeds the at least one timeout value, the sensor unit 6 - 12 changes into a power-save mode.

According to an aspect, at least one sensor unit 6 - 12 has more than one power-save mode. The sensor unit 6 - 12 changes into a first power-save mode when a timeout occurs. The first power-save mode reduces power consumption to some extent. At the same time, the first power-save mode enables fast activation of the sensor unit 6 - 12.

The at least one sensor unit 6 - 12 also has at least a second power-save mode. The second power-save mode reduces power consumption to a greater extent compared to the first power-save mode. At the same time, the activation of the sensor unit 6 - 12 will take longer compared to the first power-save mode. The sensor unit 6 - 12 may, for instance, change from the first power-save mode into the second power-save mode when the time lapsed exceeds a second timeout value.

According to an aspect, the processing module 13 is operable to generate a deactivation signal that sends at least one sensor unit into the second power-save mode. To that end, the structure of the deactivation signal has an entry that corresponds to the power-save mode of the targeted device(s) 6 - 12. The processing module 13 may, by way of non-limiting example, send one or several sensor units 6 - 12 into the second power-save mode during nighttime.

According to another aspect, the processing module 13 is operable to generate a frequency signal. The frequency signal is indicative of the frequency at which a targeted device 6 - 12 should schedule events such as measurements and / or data transmissions. To that end, the processing module 13 determines a frequency value. The frequency value advantageously is a function of temperature fluctuations and / or occupants' presence or absence, etc. The frequency value and / or the frequency signal are preferably generated based on measurement data read from a sensor module 15; 20.

It is also envisaged that a (wireless) sensor unit 6 - 12 with a sensor module 15 is operable to measure mass flow of a fluid, in particular mass flow of a gas. This particular type of sensor unit 6 - 12 may, by way of non-limiting example, be arranged in a (side channel of) a Venturi tube and / or in a Venturi burner. The sensor unit 6 - 12 is preferably employed to regulate and / or (PID) control parameters of the burner such as the speed of a blower and / or gas/air ratios and / or valve positions.

In other words, the instant disclosure teaches a comfort unit 2 - 5 (room unit 2 - 5) for installation in a structure 1, the comfort unit 2 - 5 comprising:
at least a sensor module 15; 20 selected from a clock or from a temperature sensing module 15 or from a presence detection module 20, and
at least an antenna 17, a processing module 13,
at least a radio frequency module 16 communicatively coupled to the processing module 13, and
wherein the at least a radio frequency module 16 comprises an output channel connected to the at least an antenna 17, and
wherein the processing module 13 is configured to transmit a signal via the at least a radio frequency module 16 and via the at least an antenna 17 to at least a receiving unit 6 - 12 having a sleep mode and an active mode and being located at a distance from the comfort unit 2 - 5, and
wherein the at least a sensor module 15; 20 is communicatively coupled to the processing module 13 and the processing module 13 is configured to read measurement data from the at least a sensor module 15; 20, and
wherein the processing module 13 is configured to process the measurement data read from the at least a sensor module 15; 20 and is configured to make a positive determination or a negative determination based upon the processed measurement data, and
wherein the processing module 13 upon making a positive determination is configured to generate a wake-up signal with an instruction for a receiving unit 6 - 12 to change from sleep mode to active mode, and
wherein the processing module 13 upon generation of the wake-up signal is configured to transmit the wake-up signal to the at least a radio frequency module 16,
wherein the at least a radio frequency module 16 upon receipt of the wake-up signal from the processing module 13 is configured to transmit the wake-up signal to at least a receiving unit 6 - 12 via the at least an antenna 17.

The instant disclosure also teaches a comfort unit 2 - 5 (room unit 2 - 5) for installation in a structure 1, the comfort unit 2 - 5 comprising:
at least a sensor module 15; 20 selected from a clock or from a temperature sensing module 15 or from a presence detection module 20, and
at least an antenna 17, a processing module 13,
at least a radio frequency module 16 communicatively coupled to the processing module 13, and
wherein the at least a radio frequency module 16 comprises an output channel connected to the at least an antenna 17, and
wherein the processing module 13 is configured to transmit a signal via the at least a radio frequency module 16 and via the at least an antenna 17 to at least a receiving unit 6 - 12 having a sleep mode and an active mode and being located at a distance from the comfort unit 2 - 5, and
wherein the at least a sensor module 15; 20 is communicatively coupled to the processing module 13 and the processing module 13 is configured to read measurement data from the at least a sensor module 15; 20, and
wherein the processing module 13 is configured to process the measurement data read from the at least a sensor module 15; 20 and is configured to determine a frequency value as a function of the determined change in temperature, and
wherein the processing module 13 is configured to generate a frequency signal with an instruction for a receiving unit 6 - 12 to schedule frequencies of data transmissions by the receiving unit 6 - 12 as indicated by the determined frequency value, and
wherein the processing module 13 upon generation of the frequency signal is configured to transmit the frequency signal to the at least a radio frequency module 16,
wherein the at least a radio frequency module 16 upon receipt of the frequency signal from the processing module 13 is configured to transmit the frequency signal to at least a receiving unit 6 - 12 via the at least an antenna 17.

The instant disclosure also teaches one of the aforementioned comfort units 2 - 5 (room units 2 - 5), wherein the comfort unit 2 - 5 further comprises a memory 18, in particular comprises a non-volatile memory 18, communicatively coupled to the processing module 13,
wherein the processing module 13 is configured to read data from the memory 18.

The instant disclosure still further teaches the aforementioned comfort unit 2 - 5 (room unit 2 - 5) with a memory 18, wherein the memory 18 stores a threshold value, and
wherein the processing module 13 is configured to read the threshold value from the memory 18, and
wherein the processing module 13 is configured to alter, in particular to increase or to decrease the threshold value read from the memory 18 as a function of the measurement data read from the at least a sensor module 15.

The instant disclosure still further teaches the aforementioned comfort unit 2 - 5 (room unit 2 - 5) with a memory 18, wherein the memory 18 stores a threshold value, and
wherein the processing module 13 is configured to read the threshold value from the memory 18, and
wherein the processing module 13 is configured to alter, in particular to increase or to decrease the threshold value read from the memory 18.

The instant disclosure further teaches one of the aforementioned comfort units 2 - 5 (room unit 2 - 5), wherein the comfort unit 2 - 5 further comprises an input / output module 14, and
wherein the at least a sensor module 15; 20 is communicatively coupled to the input / output module 14, and
wherein the input / output module 14 is communicatively coupled to the processing module 13, such that the processing module 13 is operable to read measurement data from the at least a sensor module 15; 20 via the input / output module 14.

The instant disclosure still further teaches one of the aforementioned comfort units 2 - 5 (room unit 2 - 5), wherein the at least a radio frequency module 16 upon receipt of the wake-up signal from the processing module 13 is configured for wireless transmission of the wake-up signal to at least a receiving unit 6 - 12 via the at least an antenna 17.

The instant disclosure also teaches one of the aforementioned comfort units 2 - 5 (room units 2 - 5), wherein the processing module 13 upon making a negative determination is configured to generate a sleep signal with an instruction for a receiving unit 6 - 12 in active mode to change to sleep mode,
wherein the processing module 13 upon generation of the sleep signal is configured to transmit the sleep signal to the at least a radio frequency module 16,
wherein the at least a radio frequency module 16 upon receipt of the sleep signal from the processing module 13 is configured to transmit the sleep signal to at least a receiving unit 6 - 12 via the at least an antenna 17.

The instant disclosure also teaches one of the aforementioned comfort units 2 - 5 (room units 2 - 5), wherein the at least a radio frequency module 16 upon receipt of the sleep signal from the processing module 13 is configured for wireless transmission of the sleep signal to at least a receiving unit 6 - 12 via the at least an antenna 17.

The instant disclosure also teaches one of the aforementioned comfort units 2 - 5 (room units 2 - 5),wherein at least a receiving unit 6 - 12 is configured to receive a wake-up signal from the comfort unit 2 - 5 and
wherein upon receipt of the wake-up signal the at least a receiving unit 6 - 12 is operable to change from its sleep mode into its active mode.

The instant disclosure further teaches one of the aforementioned comfort units 2 - 5 (room units 2 - 5), wherein at least a receiving unit 6 - 12 is configured to receive a sleep signal from the comfort unit 2 - 5, and
wherein upon receipt of the sleep signal the at least a receiving unit 6 - 12 is operable to change from its active mode into its sleep mode.

The instant disclosure still further teaches one of the aforementioned comfort units 2 - 5 (room units 2 - 5), wherein at least a receiving unit 6 - 12 comprises at least a power source, in particular comprises at least a battery, and
wherein the at least a receiving unit 6 - 12 is configured to draw less power from its at least a power source in sleep mode than in active mode.

The instant disclosure also teaches the aforementioned comfort unit 2 - 5 (room unit 2 - 5) with a memory 18, wherein the memory 18 stores a lookup-table with entries indicating periods of occupants' absence, and
wherein the at least a sensor module is a clock, and
wherein the processing module 13 is configured to read the lookup-table from the memory 18, and
wherein the processing module 13 is configured to read measurement data in the form of time data from the at least a sensor module, and
wherein the processing module 13 is configured to process the measurement data by comparing the measurement data to the entries of the look-up table, and
wherein the processing module 13 is configured to make a negative determination based upon the measurement data matching a period of occupants' absence and / or make a positive determination based upon the measurement data not matching a period of occupants' absence.

The instant disclosure still further teaches one of the aforementioned comfort units 2 - 5 (room units 2 - 5), wherein the at least a sensor module 20 is a presence detection module configured to output measurement data indicative of occupants' absence, and
wherein the processing module 13 is configured to read measurement data in the form of presence indicating data from the at least a sensor module 20, and
wherein the processing module 13 is configured to process the measurement data by determining if the measurement data indicate occupants' absence, and
wherein the processing module 13 is configured to make a negative determination if the measurement data indicate occupants' absence and / or make a positive determination if the measurement data do not indicate occupants' absence.

The instant disclosure also teaches the aforementioned comfort unit 2 - 5 (room unit 2 - 5) with a memory 18, wherein the memory 18 stores a threshold value, and
wherein the processing module 13 is configured to read the threshold value from the memory 18, and
wherein the at least a sensor module 15 is a temperature sensing module, and
wherein the processing module 13 is configured to read measurement data in the form of a sequence of at least two measured temperatures from the at least a sensor module 15, and
wherein the processing module 13 is configured to process the measurement data by calculating a change in temperature by comparing the change in temperature to the threshold value,
wherein the processing module 13 is configured to make a negative determination if the calculated change in temperature exceeds the threshold value.

The instant disclosure also teaches the aforementioned comfort unit 2 - 5 (room unit 2 - 5) with a memory 18, wherein the memory 18 stores a threshold value, and
wherein the processing module 13 is configured to read the threshold value from the from the memory 18, and
wherein the at least a sensor module 15 is a temperature sensing module, and
wherein the processing module 13 is configured to read measurement data in the form of a sequence of at least two measured temperatures from the at least a sensor module 15, and
wherein the processing module 13 is configured to process the measurement data by determining a change in temperature by comparing the change in temperature to the threshold value, and
wherein the processing module 13 is configured to determine a frequency value as a function of the determined change in temperature, and
wherein the processing module 13 is configured to generate a frequency signal with an instruction for a receiving unit 6 - 12 to schedule frequencies of data transmissions by the receiving unit 6 - 12 as indicated by the determined frequency value, and
wherein the processing module 13 upon generation of the frequency signal is configured to transmit the frequency signal to the at least a radio frequency module 16,
wherein the at least a radio frequency module 16 upon receipt of the frequency signal from the processing module 13 is configured to transmit the frequency signal to at least a receiving unit 6 - 12 via the at least an antenna 17.

The instant disclosure further teaches the aforementioned comfort unit 2 - 5 (room unit 2 - 5) with a memory 18, wherein the memory 18 stores a table with at least an address of at least a receiving unit 6 - 12, and
wherein the processing module 13 is configured to read the table from the memory 18, and
wherein the processing module 13 is configured to select an address from the table, and
wherein the wake-up signal comprises the selected address, and
wherein the at least a radio frequency module 16 upon receipt of the wake-up signal from the processing module 13 is configured to transmit the wake-up signal to the receiving unit 6 - 12 corresponding to the selected address via the at least an antenna 17.

The instant disclosure also discloses a structure 1 with an aforementioned comfort unit 2 - 5.

The instant disclosure further teaches a system of networked devices, in particular a system of networked devices comprising a (wireless) sensor unit 6 - 12, with an aforementioned comfort unit 2 - 5.

The instant disclosure still further teaches a method for managing the status of at least a receiving unit 6 - 12 having a sleep mode and having an active mode and being located at a distance from a comfort unit 2 - 5 (room unit 2 - 5) with at least a radio frequency module 16 and with at least an antenna 17 and with at least a sensor module 15; 20,
wherein the at least a sensor module 15; 20 is selected from a clock or from a temperature sensing module 15 or from a presence detection module 20,
the method comprising the steps of:
reading measurement data from the at least a sensor module 15; 20 of the comfort unit 2 - 5, and
processing the measurement data read from the at least a sensor module 15; 20 and making a positive determination or a negative determination based upon the processed measurement data, and
upon making a positive determination generating a wake-up signal with an instruction for the at least a receiving unit 6 - 12 to change from sleep mode to active mode, and
transmitting the wake-up signal from the processing module 13 to the at least a radio frequency module 16 of the comfort unit 2 - 5, and
transmitting the wake-up signal from the radio frequency module 16 to the at least a receiving unit 6 - 12 via the at least an antenna 17 of the comfort unit 2 - 5.

The instant disclosure also teaches a method for (temperature) measurements in a system of networked devices, the system of networked devices comprising at least a receiving unit 6 - 12 and at least a comfort unit 2 - 5 (room unit 2 - 5), the at least a receiving unit 6 - 12 comprising at least a radio frequency module 16 and at least an antenna 17 and at least a sensor module 15; 19, the at least a (wireless) sensor unit 2 - 5 comprising at least a radio frequency module 16 and at least an antenna 17 and at least a sensor module 15; 20,
the method comprising the steps of:
reading measurement data from the at least a sensor module 15; 20 of the comfort unit 2 - 5, and
processing the measurement data read from the at least a sensor module 15; 20 of the at least a comfort unit 2 - 5, such that a first value measured at the at least a comfort unit 2 - 5 is derived, and
reading measurement data from the at least a sensor module 15; 19 of the at least a (wireless) sensor unit 6 - 12, and
processing the measurement data read from the at least a sensor module 15; 19 of the at least a (wireless) sensor unit 6 - 12, such that a second value measured at the at least a (wireless) sensor unit 6 - 12 is derived, and
transmitting the second measured value from the at least a (wireless) sensor unit 6 - 12 to the at least a comfort unit 2 - 5 via the at least a radio frequency module 16 and the at least an antenna 17 of the at least a (wireless) sensor unit 6 - 12 and via the at least an antenna 17 and the at least a radio frequency module 16 of the at least a comfort unit 2 - 5, and
deriving a combined value from the first measured value and from the second measured value.

The instant disclosure further teaches the aforementioned method for (temperature) measurements, wherein a combined value is derived from the first measured value and from the second measured value by (geometrically and / or algebraically and / or weighed) averaging the first measured value and the second measured value.

The instant disclosure still further teaches one of the aforementioned methods for (temperature) measurements, wherein a combined value is derived from the first measured value and from the second measured value by adding an offset value to the first measured value,
wherein the offset value is a (linear, polynomial, exponential) function of second measured value.

### Reference numerals

- 1: structure
- 2 - 5: comfort units
- 6 - 12: (wireless) sensor units
- 13: microcomputer or processor
- 14: input / output module
- 15: temperature probe
- 16: radio frequency module
- 17: antenna
- 18: (optional, non-volatile) memory
- 19: window and / or door open / close sensor
- 20: presence detection module

## Claims

1. A comfort unit (2 - 5) for installation in a structure (1), the comfort unit (2 - 5) comprising:
a memory (18);
at least a temperature sensing module (15), and
at least an antenna (17), a processing module (13),
at least a radio frequency module (16) communicatively coupled to the processing module (13), and
wherein the at least a radio frequency module (16) comprises an output channel connected to the at least an antenna (17), and
wherein the processing module (13) is configured to transmit a signal via the at least a radio frequency module (16) and via the at least an antenna (17) to at least a receiving unit (6 - 12) having a sleep mode and having an active mode and being located at a distance from the comfort unit (2 - 5), and
wherein the at least a temperature sensing module (15) is communicatively coupled to the processing module (13) and the processing module (13) is configured to read measurement data from the at least a temperature sensing module (15), and
wherein the processing module (13) is configured to process the measurement data read from the at least a temperature sensing module (15) and is configured to make a positive determination or a negative determination based upon the processed measurement data, and
wherein the processing module (13) upon making a positive determination is configured to generate a wake-up signal with an instruction for a receiving unit (6 - 12) to change from sleep mode to active mode, and
wherein the processing module (13) upon generation of the wake-up signal is configured to transmit the wake-up signal to the at least a radio frequency module (16),
wherein the at least a radio frequency module (16) upon receipt of the wake-up signal from the processing module (13) is configured to transmit the wake-up signal to at least a receiving unit (6 - 12) via the at least an antenna (17),
**characterised in that**
the processing module (13) is configured to read data from the memory (18), and
the memory (18) stores a threshold value, and
the processing module (13) is configured to read the threshold value from the memory (18), and
the processing module (13) is configured to read measurement data in the form of a sequence of at least two measured temperatures from the at least a temperature sensing module (15), and
the processing module (13) is configured to determine a change in temperature by comparing the change in temperature to the threshold value,
the processing module (13) is configured to make a negative determination if the determined change in temperature exceeds the threshold value,
wherein the processing module (13) upon making a negative determination is configured to generate a sleep signal with an instruction for a receiving unit (6 - 12) in active mode to change to sleep mode,
wherein the processing module (13) upon generation of the sleep signal is configured to transmit the sleep signal to the at least a radio frequency module (16),
wherein the at least a radio frequency module (16) upon receipt of the sleep signal from the processing module (13) is configured to transmit the sleep signal to at least a receiving unit (6 - 12) via the at least an antenna (17).

2. The comfort unit (2 - 5) according to claim 1, wherein the comfort unit (2 - 5) further comprises an input / output module (14), and
wherein the at least a temperature sensing module (15) is communicatively coupled to the input / output module (14), and
wherein the input / output module (14) is communicatively coupled to the processing module (13), such that the processing module (13) is operable to read measurement data from the at least a temperature sensing module (15) via the input / output module (14).

3. The comfort unit (2 - 5) according to any of the claims 1 to 2,
wherein the at least a radio frequency module (16) upon receipt of the wake-up signal from the processing module (13) is configured for wireless transmission of the wake-up signal to at least a receiving unit (6 - 12) via the at least an antenna (17).

4. The comfort unit (2 - 5) according to claim 1,
wherein the at least a radio frequency module (16) upon receipt of the sleep signal from the processing module (13) is configured for wireless transmission of the sleep signal to at least a receiving unit (6 - 12) via the at least an antenna (17).

5. The comfort unit (2 - 5) according to any of the claims 1 to 4,
wherein at least a receiving unit (6 - 12) is configured to receive a wake-up signal from the comfort unit (2 - 5) and
wherein upon receipt of the wake-up signal the at least a receiving unit (6 - 12) is operable to change from its sleep mode into its active mode.

6. The comfort unit (2 - 5) according to any of the claims 1 to 5,
wherein at least a receiving unit (6 - 12) is configured to receive a sleep signal from the comfort unit (2 - 5), and
wherein upon receipt of the sleep signal the at least a receiving unit (6 - 12) is operable to change from its active mode into its sleep mode.

7. The comfort unit (2 - 5) according to any of the claims 1 to 6,
wherein at least a receiving unit (6 - 12) comprises at least a power source, in particular comprises at least a battery, and
wherein the at least a receiving unit (6 - 12) is configured to draw less power from its at least a power source in sleep mode than in active mode.

8. The comfort unit (2 - 5) according to claim 1, wherein the memory (18) stores a threshold value, and
wherein the processing module (13) is configured to read the threshold value from the from the memory (18), and
wherein the processing module (13) is configured to read measurement data in the form of a sequence of at least two measured temperatures from the at least a temperature sensing module (15), and
wherein the processing module (13) is configured to process the measurement data by determining a change in temperature by comparing the change in temperature to the threshold value, and
wherein the processing module (13) is configured to determine a frequency value as a function of the determined change in temperature, and
wherein the processing module (13) is configured to generate a frequency signal with an instruction for a receiving unit (6 - 12) to schedule frequencies of data transmissions by the receiving unit (6 - 12) as indicated by the determined frequency value, and
wherein the processing module (13) upon generation of the frequency signal is configured to transmit the frequency signal to the at least a radio frequency module (16),
wherein the at least a radio frequency module (16) upon receipt of the frequency signal from the processing module (13) is configured to transmit the frequency signal to at least a receiving unit (6 - 12) via the at least an antenna (17).

9. A system of networked devices with a comfort unit (2 - 5) according to any of the claims 1 to 8.

## Patentansprüche

1. Komforteinheit (2 bis 5) zum Installieren in einem Gebäude (1), die Folgendes umfasst:
einen Speicher (18),
zumindest ein Temperaturerfassungsmodul (15) und
zumindest eine Antenne (17), ein Verarbeitungsmodul (13),
zumindest ein Radiofrequenzmodul (16), das zur Kommunikation mit dem Verarbeitungsmodul (13) gekoppelt ist, und
wobei das zumindest eine Radiofrequenzmodul (16) einen Ausgangskanal umfasst, der mit der zumindest einen Antenne (17) verbunden ist, und
wobei das Verarbeitungsmodul (13) so konfiguriert ist, dass es über das zumindest eine Radiofrequenzmodul (16) und die zumindest eine Antenne (17) ein Signal zu zumindest einer Empfangseinheit (6 bis 12) überträgt, die einen Ruhezustand und einen aktiven Zustand aufweist und sich in einem Abstand zu der Komforteinheit (2 bis 5) befindet, und
wobei das zumindest eine Temperaturerfassungsmodul (15) zur Kommunikation mit dem Verarbeitungsmodul (13) gekoppelt und das Verarbeitungsmodul (13) so konfiguriert ist, dass es Messdaten aus dem zumindest einen Temperaturerfassungsmodul (15) ausliest, und
wobei das Verarbeitungsmodul (13) so konfiguriert ist, dass es die aus dem zumindest einen Temperaturerfassungsmodul (15) ausgelesenen Messdaten verarbeitet und auf der Grundlage der verarbeiteten Messdaten eine Positiv- oder eine Negativfeststellung trifft, und
wobei das Verarbeitungsmodul (13) so konfiguriert ist, dass es nach dem Treffen einer Positivfeststellung ein Wecksignal mit einer Anweisung für eine Empfangseinheit (6 bis 12) erzeugt, aus dem Ruhezustand in den aktiven Zustand zu wechseln, und
wobei das Verarbeitungsmodul (13) so konfiguriert ist, dass es nach dem Erzeugen des Wecksignals dieses zu dem zumindest einen Radiofrequenzmodul (16) überträgt,
wobei das zumindest eine Radiofrequenzmodul (16) so konfiguriert ist, dass es nach dem Empfangen des Wecksignals aus dem Verarbeitungsmodul (13) dieses über die zumindest eine Antenne (17) zu zumindest einer Empfangseinheit (6 bis 12) überträgt,
**dadurch gekennzeichnet, dass**
das Verarbeitungsmodul (13) so konfiguriert ist, dass es Daten aus dem Speicher (18) ausliest, und
der Speicher (18) einen Grenzwert speichert und
das Verarbeitungsmodul (13) so konfiguriert ist, dass es den Grenzwert aus dem Speicher (18) ausliest, und
das Verarbeitungsmodul (13) so konfiguriert ist, dass es Messdaten in Form einer Abfolge von mindestens zwei gemessenen Temperaturen aus dem zumindest einen Temperaturerfassungsmodul (15) ausliest, und
das Verarbeitungsmodul (13) so konfiguriert ist, dass es durch Vergleichen einer Temperaturänderung mit dem Grenzwert die Temperaturänderung ermittelt,
das Verarbeitungsmodul (13) so konfiguriert ist, dass es eine Negativfeststellung trifft, wenn die ermittelte Temperaturänderung den Grenzwert übersteigt,
wobei das Verarbeitungsmodul (13) so konfiguriert ist, dass es nach dem Treffen einer Negativfeststellung für eine Empfangseinheit (6 bis 12) im aktiven Zustand ein Ruhesignal mit einer Anweisung erzeugt, in den Ruhezustand zu wechseln,
wobei das Verarbeitungsmodul (13) so konfiguriert ist, dass es nach dem Erzeugen des Ruhesignals dieses zu dem zumindest einen Radiofrequenzmodul (16) überträgt,
wobei das zumindest eine Radiofrequenzmodul (16) so konfiguriert ist, dass es nach dem Empfangen des Ruhesignals aus dem Verarbeitungsmodul (13) dieses über die zumindest eine Antenne (17) zu zumindest einer Empfangseinheit (6 bis 12) überträgt.

2. Die Komforteinheit (2 bis 5) nach Anspruch 1, wobei die Komforteinheit (2 bis 5) ferner ein Eingabe-Ausgabe-Modul (14) umfasst und
wobei das zumindest eine Temperaturerfassungsmodul (15) zur Kommunikation mit dem Eingabe-Ausgabe-Modul (14) gekoppelt ist und
wobei das Eingabe-Ausgabe-Modul (14) zur Kommunikation so mit dem Verarbeitungsmodul (13) gekoppelt ist, dass das Verarbeitungsmodul (13) in der Lage ist, über das Eingabe-Ausgabe-Modul (14) Messdaten aus dem zumindest einen Temperaturerfassungsmodul (15) auszulesen.

3. Die Komforteinheit (2 bis 5) nach einem der Ansprüche 1 bis 2,
wobei das zumindest eine Radiofrequenzmodul (16) so konfiguriert ist, dass es nach dem Empfangen des Wecksignals aus dem Verarbeitungsmodul (13) dieses drahtlos über die zumindest eine Antenne (17) zu zumindest einer Empfangseinheit (6 bis 12) überträgt.

4. Die Komforteinheit (2 bis 5) nach Anspruch 1,
wobei das zumindest eine Radiofrequenzmodul (16) so konfiguriert ist, dass es nach dem Empfangen des Ruhesignals aus dem Verarbeitungsmodul (13) dieses drahtlos über die zumindest eine Antenne (17) zu zumindest einer Empfangseinheit (6 bis 12) überträgt.

5. Komforteinheit (2 bis 5) nach einem der Ansprüche 1 bis 4,
wobei zumindest eine Empfangseinheit (6 bis 12) so konfiguriert ist, dass sie ein Wecksignal aus der Komforteinheit (2 bis 5) empfängt, und
wobei die zumindest eine Empfangseinheit (6 bis 12) nach Empfang des Wecksignals in der Lage ist, aus ihrem Ruhezustand in ihren aktiven Zustand zu wechseln.

6. Die Komforteinheit (2 bis 5) nach einem der Ansprüche 1 bis 5,
wobei zumindest eine Empfangseinheit (6 bis 12) so konfiguriert ist, dass sie ein Ruhesignal aus der Komforteinheit (2 bis 5) empfängt, und
wobei die zumindest eine Empfangseinheit (6 bis 12) nach Empfang des Ruhesignals in der Lage ist, aus ihrem aktiven Zustand in ihren Ruhezustand zu wechseln.

7. Die Komforteinheit (2 bis 5) nach einem der Ansprüche 1 bis 6,
wobei zumindest eine Empfangseinheit (6 bis 12) zumindest eine Stromquelle, insbesondere zumindest eine Batterie umfasst und
wobei die zumindest eine Empfangseinheit (6 bis 12) so konfiguriert ist, dass sie im Ruhezustand weniger Strom von ihrer zumindest einen Stromquelle bezieht als im aktiven Zustand.

8. Die Komforteinheit (2 bis 5) nach Anspruch 1, wobei der Speicher (18) einen Grenzwert speichert und
wobei das Verarbeitungsmodul (13) so konfiguriert ist, dass es den Grenzwert aus dem Speicher (18) ausliest, und
wobei das Verarbeitungsmodul (13) so konfiguriert ist, dass es Messdaten in Form einer Abfolge von mindestens zwei gemessenen Temperaturen aus dem zumindest einen Temperaturerfassungsmodul (15) ausliest, und
wobei das Verarbeitungsmodul (13) so konfiguriert ist, dass es die Messdaten verarbeitet, indem es durch Vergleichen einer Temperaturänderung mit dem Grenzwert die Temperaturänderung ermittelt, und
wobei das Verarbeitungsmodul (13) so konfiguriert ist, dass es in Abhängigkeit von der ermittelten Temperaturänderung einen Häufigkeitswert ermittelt, und
wobei das Verarbeitungsmodul (13) so konfiguriert ist, dass es ein Häufigkeitssignal mit einer Anweisung für eine Empfangseinheit (6 bis 12) erzeugt, Häufigkeiten von Datenübertragungen durch die Empfangseinheit (6 bis 12) gemäß dem ermittelten Häufigkeitswert festzulegen, und
wobei das Verarbeitungsmodul (13) so konfiguriert ist, dass es nach dem Erzeugen des Häufigkeitssignals dieses zu dem zumindest einen Radiofrequenzmodul (16) überträgt,
wobei das zumindest eine Radiofrequenzmodul (16) so konfiguriert ist, dass es nach dem Empfangen des Häufigkeitssignals aus dem Verarbeitungsmodul (13) dieses über die zumindest eine Antenne (17) zu zumindest einer Empfangseinheit (6 bis 12) überträgt.

9. System vernetzter Vorrichtungen mit einer Komforteinheit (2 bis 5) nach einem der Ansprüche 1 bis 8.

## Revendications

1. Unité de confort (2 - 5) destinée à une installation dans une structure (1), l'unité de confort (2 - 5) comprenant :
une mémoire (18),
au moins un module de détection de température (15), et
au moins une antenne (17), un module de traitement (13),
au moins un module radiofréquence (16) couplé en communication au module de traitement (13), et
dans laquelle le au moins un module radiofréquence (16) comprend un canal en sortie raccordé à la au moins une antenne (17), et
dans laquelle le module de traitement (13) est configuré de façon à transmettre un signal par l'intermédiaire du au moins un module radiofréquence (16) et par l'intermédiaire de la au moins une antenne (17) à au moins une unité de réception (6 - 12) possédant un mode sommeil et possédant un mode actif et étant située à une distance de l'unité de confort (2 - 5), et
dans laquelle le au moins un module de détection de température (15) est couplé en communication au module de traitement (13) et le module de traitement (13) est configuré de façon à lire des données de mesure à partir du au moins un module de détection de température (15), et
dans laquelle le module de traitement (13) est configuré de façon à traiter les données de mesure lues à partir du au moins un module de détection de température (15) et est configuré de façon à effectuer une détermination positive ou une détermination négative en fonction des données de mesure traitées, et
dans laquelle le module de traitement (13) après avoir effectué une détermination positive est configuré de façon à générer un signal d'éveil avec une instruction destinée à une unité de réception (6 - 12) de façon à passer du mode sommeil vers le mode actif, et
dans laquelle le module de traitement (13) après la génération du signal d'éveil est configuré de façon à transmettre le signal d'éveil au au moins un module radiofréquence (16),
dans laquelle le au moins un module radiofréquence (16) après réception du signal d'éveil à partir du module de traitement (13) est configuré de façon à transmettre le signal d'éveil à au moins une unité de réception (6 - 12) par l'intermédiaire de la au moins une antenne (17),
**caractérisée en ce que**
le module de traitement (13) est configuré de façon à lire des données à partir de la mémoire (18), et
la mémoire (18) conserve en mémoire une valeur seuil, et
le module de traitement (13) est configuré de façon à lire la valeur seuil à partir de la mémoire (18), et
le module de traitement (13) est configuré de façon à lire des données de mesure sous la forme d'une séquence d'au moins deux températures mesurées à partir du au moins un module de détection de température (15), et
le module de traitement (13) est configuré de façon à déterminer un changement de température par la comparaison du changement de température à la valeur seuil,
le module de traitement (13) est configuré de façon à effectuer une détermination négative si le changement de température déterminé dépasse la valeur seuil,
dans laquelle le module de traitement (13) après avoir effectué une détermination négative est configuré de façon à générer un signal de mise en sommeil avec une instruction destinée à une unité de réception (6 - 12) en mode actif de façon à passer en mode sommeil,
dans laquelle le module de traitement (13) après la génération du signal de mise en sommeil est configuré de façon à transmettre le signal de mise en sommeil au au moins un module radiofréquence (16),
dans laquelle le au moins un module radiofréquence (16) après réception du signal de mise en sommeil à partir du module de traitement (13) est configuré de façon à transmettre le signal de mise en sommeil à au moins une unité de réception (6 - 12) par l'intermédiaire de la au moins une antenne (17).

2. L'unité de confort (2 - 5) selon la revendication 1, dans laquelle l'unité de confort (2 - 5) comprend en outre un module d'entrée / sortie (14), et
dans laquelle le au moins un module de détection de température (15) est couplé en communication au module d'entrée / sortie (14), et
dans laquelle le module d'entrée / sortie (14) est couplé en communication au module de traitement (13), de sorte que le module de traitement (13) soit actionnable de façon à lire des données de mesure à partir du au moins un module de détection de température (15) par l'intermédiaire du module d'entrée / sortie (14) .

3. L'unité de confort (2 - 5) selon l'une quelconque des revendications 1 à 2,
dans laquelle le au moins un module radiofréquence (16) après réception du signal d'éveil à partir du module de traitement (13) est configuré pour une transmission sans fil du signal d'éveil à au moins une unité de réception (6 - 12) par l'intermédiaire de la au moins une antenne (17).

4. Unité de confort (2 - 5) selon la revendication 1,
dans laquelle le au moins un module radiofréquence (16) après réception du signal de mise en sommeil à partir du module de traitement (13) est configuré pour une transmission sans fil du signal de mise en sommeil à au moins une unité de réception (6 - 12) par l'intermédiaire de la au moins une antenne (17).

5. L'unité de confort (2 - 5) selon l'une quelconque des revendications 1 à 4,
dans laquelle au moins une unité de réception (6 - 12) est configurée de façon à recevoir un signal d'éveil à partir de l'unité de confort (2 - 5) et
dans laquelle après réception du signal d'éveil la au moins une unité de réception (6 - 12) est actionnable de façon à passer de son mode sommeil à son mode actif.

6. L'unité de confort (2 - 5) selon l'une quelconque des revendications 1 à 5,
dans laquelle au moins une unité de réception (6 - 12) est configurée de façon à recevoir un signal de mise en sommeil à partir de l'unité de confort (2 - 5), et
dans laquelle après réception du signal de mise en sommeil la au moins une unité de réception (6 - 12) est actionnable de façon à passer de son mode actif à son mode sommeil.

7. L'unité de confort (2 - 5) selon l'une quelconque des revendications 1 à 6,
dans laquelle au moins une unité de réception (6 - 12) comprend au moins une source d'alimentation électrique, comprenant plus particulièrement au moins une batterie, et
dans laquelle la au moins une unité de réception (6 - 12) est configurée de façon à prélever moins d'alimentation électrique à partir de sa au moins une source d'alimentation électrique en mode sommeil qu'en mode actif.

8. L'unité de confort (2 - 5) selon la revendication 1, dans laquelle la mémoire (18) conserve en mémoire une valeur seuil, et
dans laquelle le module de traitement (13) est configuré de façon à lire la valeur seuil à partir de la mémoire (18), et
dans laquelle le module de traitement (13) est configuré de façon à lire des données de mesure sous la forme d'une séquence d'au moins deux températures mesurées à partir du au moins un module de détection de température (15), et
dans laquelle le module de traitement (13) est configuré de façon à traiter les données de mesure par la détermination d'un changement de température par la comparaison du changement de température à la valeur seuil, et
dans laquelle le module de traitement (13) est configuré de façon à déterminer une valeur de fréquence sous la forme d'une fonction du changement de température déterminé, et
dans laquelle le module de traitement (13) est configuré de façon à générer un signal de fréquence avec une instruction destinée à une unité de réception (6 - 12) de façon à planifier des fréquences de transmissions de données par l'unité de réception (6 - 12) comme indiqué par la valeur de fréquence déterminée, et
dans laquelle le module de traitement (13) après la génération du signal de fréquence est configuré de façon à transmettre le signal de fréquence au au moins un module radiofréquence (16),
dans laquelle le au moins un module radiofréquence (16) après réception du signal de fréquence à partir du module de traitement (13) est configuré de façon à transmettre le signal de fréquence à au moins une unité de réception (6 - 12) par l'intermédiaire de la au moins une antenne (17).

9. Système de dispositifs en réseau avec une unité de confort (2 - 5) selon l'une quelconque des revendications 1 à 8.
